# FASCICULE DE BREVET EUROPEEN

(11) **EP 1 118 548 B1**
(45) Date de publication et mention de la délivrance du brevet: **14.04.2004**
(21) Numéro de dépôt: 01810030.5
(22) Date de dépôt: 12.01.2001
(51) Int. Cl.: B65D 43/10, B31B 43/00

(54) **Procédé de fabrication d'un couvercle coiffant pour emballage tubulaire et couvercle ainsi procédé**
Verfahren zur Herstellung eines Deckels einer hülsenförmigen Verpackung und Deckel hergestellt nach dem Verfahren
Method of making a covering lid for a tubular package and lid so produced

(30) Priorité: 18.01.2000 FR 0000597
(43) Date de publication de la demande: 25.07.2001
(73) Titulaire: Sireix, Georges, 68400 Riedisheim (FR)
(72) Inventeur: Sireix, Georges, 68400 Riedisheim (FR)
(74) Mandataire: Kiliaridis, Constantin

(56) Documents cités:
- EP-A- 0 459 017
- DE-A- 4 018 843
- US-A- 1 597 978
- US-A- 2 832 522

## Description

La présente invention concerne un procédé de fabrication d'un couvercle coiffant destiné à être assemblé à cran sur un conteneur tubulaire ou un gobelet de toute forme muni d'un ourlage extérieur sur son extrémité supérieure constitué d'une bandelette et d'un disque embouti, ainsi qu'un couvercle fabriqué selon ce procédé. (Voir US 1 597 978).

Actuellement, les produits de grande consommation concernant aussi bien le domaine alimentaire, chimique que industriel sont conditionnés dans des emballages constitués d'une pluralité de matériaux et de composants. Depuis plusieurs années, pour des raisons écologiques, on a proposé des emballages faits de matériaux facilement recyclables en éliminant le plus possible les autres matériaux tels que des matériaux plastiques, métalliques (aluminium), etc.

La présente invention a pour but de proposer pour des emballages tubulaires et gobelets munis sur leur extrémité supérieure d'un ourlage extérieur, un couvercle coiffant permettant, après avoir retiré la membrane ou opercule de protection fermant la partie supérieure de l'emballage, de fermer d'une manière suffisamment hermétique l'emballage tout le long de son utilisation, c'est-à-dire jusqu'à ce que le produit contenu soit épuisé. Cette caractéristique s'applique également aux emballages sans membrane ou opercule.

Il existe actuellement des emballages, par exemple pour de produits alimentaires tels que beurre, margarine, yaourt, ou encore des gobelets contenant un liquide à boire, et autres qui sont contenus dans des récipients de toute grandeur faits d'un matériau recyclable, par exemple du carton. Ces récipients sont coiffés sur leur partie supérieure d'un couvercle monté à cran sur un ourlage extérieur du récipient permettant ainsi après avoir retiré la membrane de protection de le refermer aussi hermétiquement que possible jusqu'à la consommation complète du produit contenu. Ce type de couvercle est fait en principe d'une matière plastique qui donne satisfaction au niveau de l'efficacité, mais non au niveau du recyclage de déchets et sont difficiles à décorer. Les tentatives d'utiliser un matériau recyclable tel que du carton ou similaire n'ont pas donné satisfaction sur les changements de température. L'humidité altère les dimensions du couvercle et il perd son efficacité.

Le but de la présente invention est de proposer un couvercle fait de matériau recyclable tel que, par exemple, le carton et permettant d'avoir une efficacité identique au niveau de l'utilisation du couvercle coiffant après le retrait de la membrane de protection, à celui d'un couvercle en plastique.

Le procédé selon l'invention est caractérisé par les étapes suivantes :
on découpe une bandelette dans un matériau rigide et fibreux muni sur une de ses faces d'un adhésif, la découpe se faisant parallèlement aux fibres du matériau,
on forme sur un mandrin de dimensions égales aux dimensions intérieures du couvercle une anneau, la longueur de la bandelette permettant de superposer les extrémités autour du mandrin pour les sceller l'une sur l'autre,
on découpe un disque dans un matériau rigide de forme correspondant au couvercle avant emboutissage,
on introduit dans un outil à deux étages, le disque dans la partie supérieure et l'anneau dans la partie inférieure,
on introduit un poinçon chauffé dans l'anneau et au moyen dudit poinçon et d'une matrice dudit outil, on emboutit le disque et on le scelle sur l'anneau,
on forme le profil de gerbage en fin de course du poinçon.

Les avantages du procédé sont les suivants: l'utilisation d'une bandelette découpée dans le sens de la longueur de fibres évite le changement des dimensions de la jupe du couvercle car il s'est avéré que les produits fibreux tels que le carton sous l'influence de la température ou de l'humidité leurs fibres ne s'allongent pas, mais simplement gonflent.

Ainsi, les dimensions du couvercle ne se modifient pas même après un séjour plus ou moins long dans une chambre froide humide, congélateur ou réfrigérateur ménagers.

L'inventeur avait réalisé un couvercle, notamment avec un cran avec une seule couche d'un matériau, par exemple du carton ou tout autre matériau fibreux équivalent, muni uniquement à l'intérieur d'un film évitant le contact du carton avec le produit. Mais à cause de l'humidité et de la déformation après une ou deux utilisations le couvercle ne ferme plus efficacement l'emballage.

Suite à cette expérience, l'inventeur a cherché le moyen d'obtenir un couvercle fait de ces mêmes matériaux recyclables, mais présentant l'efficacité d'un couvercle, par exemple, fait en matière plastique. Il est arrivé à la solution précitée qui donne satisfaction puisque l'on obtient une fermeture efficace de l'emballage, même après un grand nombre d'ouvertures et de fermetures de ce couvercle.

Selon un premier mode d'exécution particulier, on forme par expansion un cran sous forme d'une gorge ouverte vers l'intérieur du couvercle.

Selon une variante d'exécution améliorée, le disque dépasse l'anneau sur tout son pourtour, ainsi après le scellage la partie dépassant du disque est rabattue de 180° sur la paroi intérieure de l'anneau, elle est lissée et scellée. Cette construction est encore plus efficace que la première et assure une meilleure résistance à la déformation due à l'humidité et aux changements de température auxquels est soumis l'emballage.

Selon une variante préférée de l'invention, le matériau rigide est du carton ou du papier.

Selon une autre variante d'exécution, le matériau adhésif est une colle activée à chaud ou à froid.

Selon une autre variante, la largeur de la bandelette correspond approximativement à la distance entre l'extrémité de la jupe du couvercle et le cran.

Selon une autre variante, le matériau adhésif est un film activé à chaud ou à froid.

Selon une autre exécution, le disque est muni d'un film de protection pour éviter le contact direct entre ce disque et le produit emballé.

L'invention concerne également un couvercle obtenu selon le procédé de la présente invention.

L'invention sera décrite plus en détails à l'aide des dessins annexés représentant trois exécutions préférées de la présente invention.
Les figures 1, 2, 3 et 4 représentent une première variante d'exécution.
Les figures 5, 6, 7 représentent une deuxième variante d'exécution du procédé.
La figure 8 représente une troisième variante d'exécution.
La figure 9 représente une variante du couvercle de la figure 8 et
La figure 10 représente la partie supérieure d'un conteneur coiffé par le couvercle de la figure 7.
La figure 11 représente un mode d'exécution simplifié du couvercle.

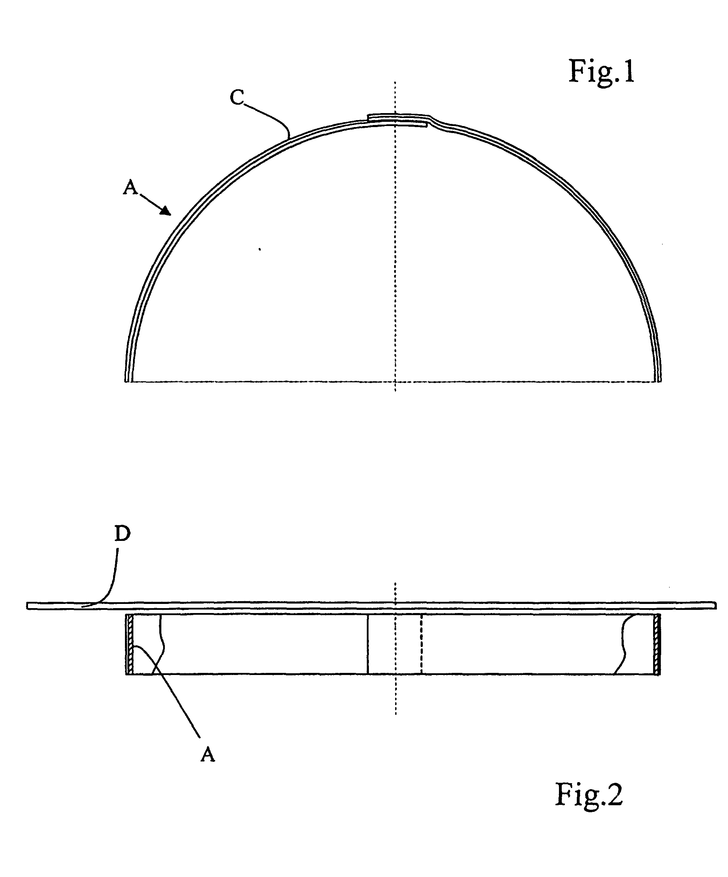

A la figure 1, on a représenté un anneau A formé d'une bandelette coupée dans un matériau tel que du carton dans le sens des fibres, ledit anneau étant formé sur un poinçon chauffé permettant de sceller les deux extrémités de l'anneau l'une sur l'autre. La dimension de l'anneau correspond aux dimensions intérieures du couvercle à former. L'anneau A et plus précisément le matériau qui le forme est muni sur une de ses faces d'un adhésif C permettant le scellage en premier lieu de deux extrémités de l'anneau et en deuxième lieu le scellage de l'anneau sur un disque.

Par la suite, on découpe dans un matériau qui peut être le même un disque D dont les dimensions correspondent au couvercle à former avant emboutissage et on introduit ces deux éléments dans un outil à deux étages, l'anneau A à l'étage inférieur et le disque D à l'étage supérieur. Cet outil comprend une matrice (non représentée) et un poinçon (non représenté) permettant de former par emboutissage le couvercle aux dimensions et formes souhaitées. Le poinçon chauffé est rentré à l'intérieur de l'anneau A et il avance vers le disque D qui vient s'emboutir autour de l'anneau A formant ainsi la jupe latérale L du couvercle et en même temps cette jupe du disque D vient se sceller sur l'anneau A. En poursuivant sa course, le poinçon forme le profil de gerbage 1. Ensuite, par expansion, on forme le cran 3 qui en réalité est une gorge ouverte vers l'intérieur. Ce cran viendra s'encliqueter dans l'ourlage de la partie supérieure de l'emballage tubulaire.

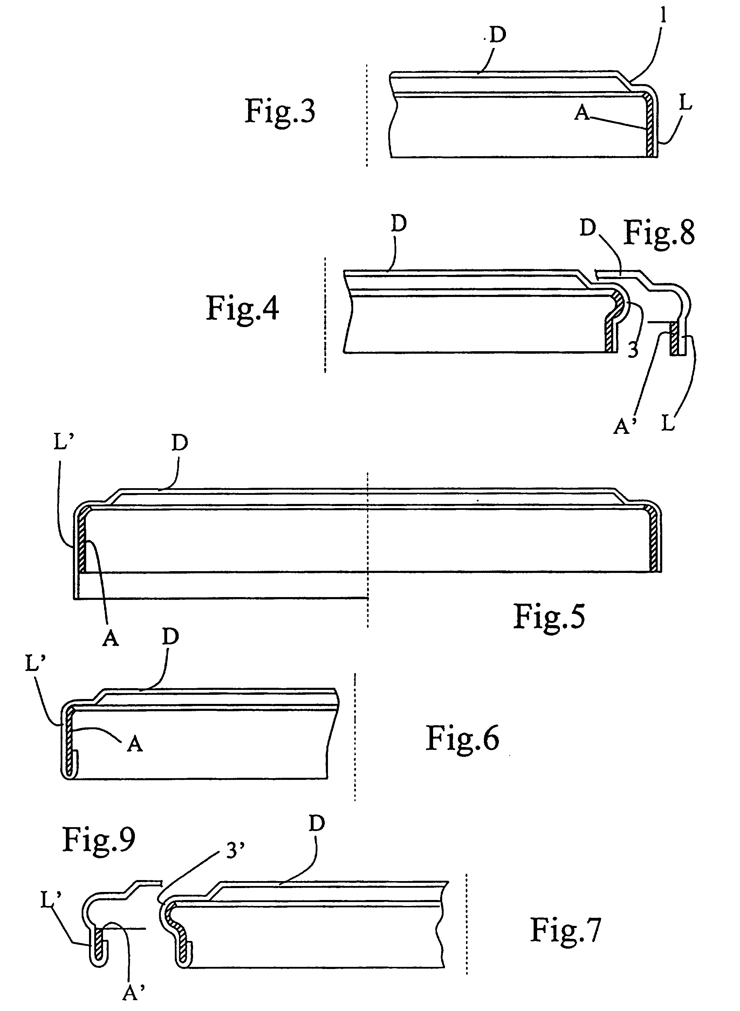

Selon une variante d'exécution, le disque D présente des dimensions supérieures au couvercle avant emboutissage comme représenté à la figure 5, de sorte que lorsqu'il est embouti dans l'outil à deux étages, sa jupe L' dépasse l'anneau A, ce qui permet, comme représenté à la figure 6, de rabattre cette partie dépassante vers l'intérieur du couvercle assurant ainsi une meilleure tenue et une meilleure rigidité du couvercle. Par la suite, le procédé se termine comme d'habitude, à savoir la formation d'une gorge, d'un cran 3' comme représenté à la figure 7.

Enfin, dans le but d'économiser le matériau, il est possible de prévoir des bandelettes pour former un anneau dont la largeur est inférieure à la longueur totale de la jupe, c'est-à-dire que l'anneau peut occuper une place entre l'extrémité de la jupe et la position du cran comme représenté à la figure 8, ou 9.

Ceci est notamment valable pour les petits emballages sans diminuer l'efficacité du couvercle.

Il est évident que le disque pourrait être imprimé sur sa face supérieure ou muni d'un film préimprimé. Il est également possible de munir le disque à l'intérieur d'un film de protection pour éviter le contact du contenu avec le disque.

La forme du couvercle correspond à la section transversale de l'emballage tubulaire et peut être aussi bien ronde, rectangulaire, triangulaire ou mixte sans aucune conséquence pour l'invention.

Le matériau rigide utilisé pour la fabrication aussi bien de l'anneau que du disque peut être un stock de feuilles ou de bobines.

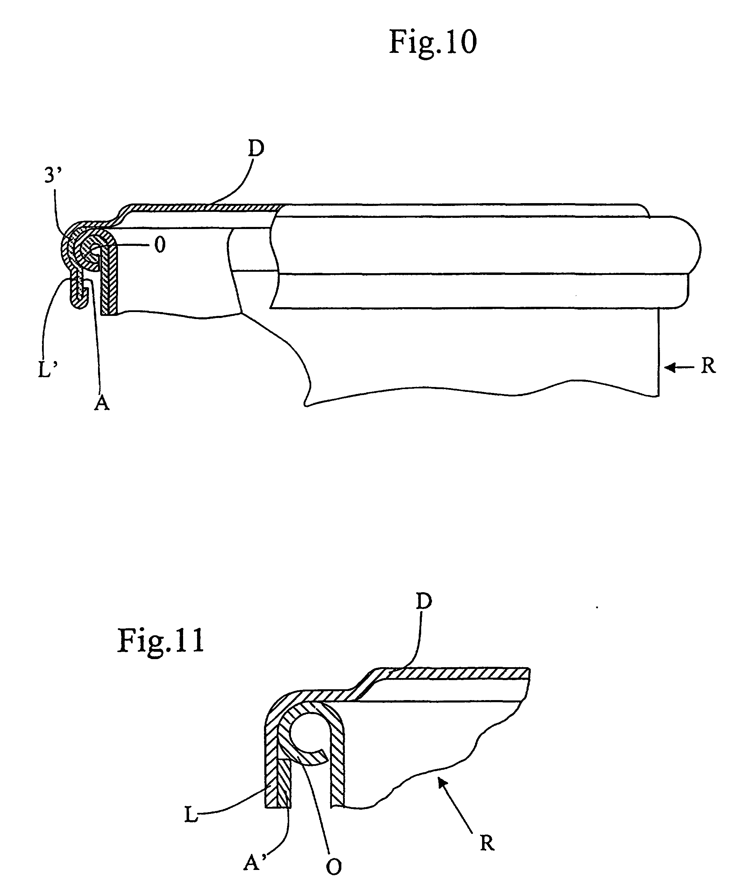

A la figure 10, on a représenté le couvercle de la figure 7 coiffant un récipient R. Le récipient est muni sur son extrémité supérieure d'un ourlage 0 collaborant avec le cran 3'.

Une forme d'exécution simplifiée du couvercle est représentée à la figure 11. Dans ce cas, on a évité la formation d'un cran et l'encliquetage du couvercle sur l'ourlage O de la partie supérieure de l'emballage tubulaire s'effectue par l'anneau A' porté par la jupe latérale L du couvercle.

## Revendications

1. Procédé de fabrication d'un couvercle coiffant destiné à être assemblé à cran sur un conteneur tubulaire ou d'un gobelet de toute forme muni d'un ourlage extérieur sur son extrémité supérieure constitué d'une bandelette et d'un disque embouti, **caractérisé par** les étapes suivantes :
on découpe une bandelette dans un matériau rigide et fibreux muni sur une de ses faces d'un adhésif, la découpe se faisant parallèlement aux fibres du matériau,
on forme sur un mandrin de dimensions égales aux dimensions intérieures du couvercle une anneau, la longueur de la bandelette permettant de superposer les extrémités autour du mandrin pour les sceller l'une sur l'autre,
on découpe un disque dans un matériau rigide de forme correspondant au couvercle avant emboutissage,
on introduit dans un outil à deux étages, le disque dans la partie supérieure et l'anneau dans la partie inférieure,
on introduit un poinçon chauffé dans l'anneau et au moyen dudit poinçon et d'une matrice dudit outil, on emboutit le disque et on le scelle sur l'anneau,
on forme un profil de gerbage en fin de course du poinçon.

2. Procédé selon la revendication 1, **caractérisé par le fait que** l'on forme par expansion un cran sous forme d'une gorge ouverte vers l'intérieur du couvercle.

3. Procédé selon la revendication 1 ou 2, **caractérisé par le fait que** le disque dépasse sur tout son pourtour l'anneau et que suite au scellage, on retourne la partie dépassant du disque de 180° sur la paroi intérieure de l'anneau formé, on lisse et on scelle cette partie retournée.

4. Procédé selon l'une des revendications 1 à 3, **caractérisé par le fait que** le matériau rigide est du carton ou du papier.

5. Procédé selon l'une des revendications 1 à 4, **caractérisé par le fait que** le matériau adhésif est une colle activée à chaud ou à froid.

6. Procédé selon l'une des revendications 1 à 5, **caractérisé par le fait que** le matériau adhésif est un film plastique activé à chaud ou à froid.

7. Procédé selon l'une des revendications 1 à 6, **caractérisé par le fait que** la largeur de la bandelette correspond approximativement à la distance entre l'extrémité de la jupe du couvercle et le cran.

8. Procédé selon l'une des revendications 1 à 7, **caractérisé par le fait que** le disque est muni sur sa face inférieure d'un film de protection pour éviter le contact du produit emballé avec le disque.

9. Couvercle fabriqué selon le procédé d'une des revendications 1 à 8.

## Patentansprüche

1. Verfahren zur Herstellung eines Deckels, der durch Rastung auf einen röhrenförmigen Behälter oder Becher beliebiger Form aufsetzbar ist, welcher an seinem oberen Ende mit einer äusseren Ausbuchtung versehen ist, bestehend aus einem Streifen und einer gekümpelten Scheibe, **gekennzeichnet durch** die folgenden Schritte:
man stanzt aus einem steifen, faserigen Material, das auf einer Seite mit einem Klebematerial versehen ist, ein Streifen aus, wobei der Stanzvorgang parallel zu den Fasern des Materials erfolgt,
man formt auf einem Dorn, der die gleichen Innenabmessungen wie der herzustellende Deckel hat, einen Ring, wobei die Länge des Streifens ein Überlappen seiner Enden um den Dorn herum erlaubt, um beide Enden miteinander zu versiegeln,
man stanzt aus einem steifen Material eine Scheibe mit einer dem Deckel vor der Tiefung entsprechenden Form aus,
man führt die Scheibe in den oberen Teil eines zweistufiges Werkzeug und den Ring in den unteren Teil dieses zweistufigen Werkzeugs ein,
man führt einen erwärmten Stempel in den Ring ein, man kümpelt mittels des erwähnten Stempels und einer Matrize des erwähnten Werkzeugs die Scheibe, und man versiegelt sie mit dem Ring,
man formt am Ende des Stempelhubs ein Stapelprofil.

2. Verfahren nach Anspruch 1, **dadurch gekennzeichnet, dass** man durch Expansion eine Rastkerbe am Deckel bildet, welche die Form einer ins Innere des Deckels gerichteten offenen Auskehlung hat.

3. Verfahren nach Anspruch 1 oder 2, **dadurch gekennzeichnet, dass** die Scheibe auf ihrem gesamten Umfang den Ring überragt dass man nach dem Versiegeln den überragenden Teil der Scheibe um 180° auf die Innenwand des geformten Rings umklappt und dass man den umgeklappten Teil glättet und versiegelt.

4. Verfahren nach einem der Ansprüche 1 bis 3, **dadurch gekennzeichnet, dass** das steife Material aus Karton oder Papier besteht.

5. Verfahren nach einem der Ansprüche 1 bis 4, **dadurch gekennzeichnet, dass** das Klebematerial ein Heiss- oder Kaltkleber ist.

6. Verfahren nach einem der Ansprüche 1 bis 5, **dadurch gekennzeichnet, dass** das Klebematerial ein durch Wärme oder Kälte aktivierbarer Film aus Kunststoff ist.

7. Verfahren nach einem der Ansprüche 1 bis 6, **dadurch gekennzeichnet, dass** die Breite des Streifens näherungsweise dem Abstand zwischen dem Ende des heruntergezogenen Randes des Deckel und der Rastkerbe entspricht.

8. Verfahren nach einem der Ansprüche 1 bis 7, **dadurch gekennzeichnet, dass** die Scheibe auf ihrer Unterseite mit einem Schutzfilm versehen ist, um den Kontakt des verpackten Produkts mit der Scheine zu verhindern.

9. Deckel, der nach dem Verfahren eines der Ansprüche 1 bis 8 hergestellt ist.

## Claims

1. A method for manufacturing a covering lid intended to be clipped onto a tubular container or a cup of any shape equipped with an outwardly rolled edge at its top end, consisting of a strip and of a pressed disk, **characterized by** the following steps:
a strip is cut from a rigid and fibrous material equipped on one of its faces with an adhesive, the cut being made parallel to the fibers of the material,
a ring is formed on a form of dimensions equal to the internal dimensions of the lid, the length of the strip allowing the ends to be superposed around the form so that they can be sealed together,
a disk is cut from a rigid material in a shape that corresponds to the lid prior to pressing,
these are introduced into a two-stage tool, the disk being introduced into the upper part and the ring into the lower part,
a heated punch is introduced into the ring and the disk is pressed and sealed onto the ring by means of said punch and of a die of said tool,
the nesting profile is formed at the end of the travel of the punch.

2. The method according to claim 1, wherein a catch is formed by expansion in the form of a groove open toward the inside of the lid.

3. The method as claimed in one of claims 1 or 2, wherein the disk protrudes over its entire periphery beyond the ring and, after sealing, the protruding part of the disk is turned back through 180° onto the interior wall of the ring formed, and this turned-back part is smoothed and sealed.

4. The method as claimed in one of claims 1 to 3, wherein the rigid material is cardboard or paper.

5. The method as claimed in one of claims 1 to 4, wherein the adhesive material is an adhesive activated by heat or by cold.

6. The method as claimed in one of claims 1 to 5, wherein the adhesive material is a plastic film activated by heat or by cold.

7. The method as claimed in one of claims 1 to 6, **characterized in that** the width of the strip approximately corresponds to the distance between the end of the skirt of the lid and the catch.

8. The method as claimed in one of claims 1 to 7, wherein the disk is equipped on its underside with a protective film to prevent the package product from coming into contact with the disk.

9. A lid manufactured according to the method as claimed in one of claims 1 to 8.
